# EUROPEAN PATENT SPECIFICATION

(11) **EP 0 159 893 B1**
(45) Date of publication and mention of the grant of the patent: **20.01.1993**
(21) Application number: 85302625.0
(22) Date of filing: 15.04.1985
(51) Int. Cl.: H04N 5/445

(54) **Signal generator circuits**
Signalgeneratorschaltungen
Circuits de générateur de signal

(30) Priority: 13.04.1984 JP 74365/84
(43) Date of publication of application: 30.10.1985
(73) Proprietor: NIPPON TELEGRAPH AND TELEPHONE CORPORATION, Tokyo (JP); SONY CORPORATION, Tokyo 141 (JP)
(72) Inventor: Katagiri, Koichi c/o Nippon Telegraph, Chiyoda-ku Tokyo (JP); Hanamoto, Yoshihiro c/o Nippon Telegraph, Chiyoda-ku Tokyo (JP); Maeda, Satoru c/o Patent Division, Shinagawa-ku Tokyo (JP); Taniguchi, Ikuo, Nakahara-ku Kanagawa-ken (JP)
(74) Representative: Cotter, Ivan John

(56) References cited:
- EP-A- 0 078 045
- GB-A- 2 039 695
- PATENT ABSTRACTS OF JAPAN, vol. 7, no. 148 (E-184)[1293], 29th June 1983; & JP-A-58 60 886 (HITACHI SEISAKUSHO K.K.) 11-04-1983
- ISSCC 76, DIGEST OF TECHNICAL PAPERS, vol. 19, no. 19, 18th February 1976, pages 72-73, IEEE International Solid-State Circuits Conference; T. SHIGEMATSU et al.: "An electronic auto-channel selection system using C2MOS-LSI in a TV receiver"

## Description

This invention relates to signal generator circuits. More particularly, but not exclusively, the invention relates to a signal generator circuit for generating a synchronisation signal, a display clock signal and similar signals for a television receiver employed in a character and picture image information system such as a CAPTAIN (character and pattern telephone access information network) or other videotex system and which uses, for example, a telephone network line for signal transmission.

In the CAPTAIN and other videotex character and picture image information systems and in similar systems using a colour television receiver as a display apparatus, there are required signals such as vertical and horizontal synchronisation signals, a colour sub-carrier signal (for example, a signal having a frequency of substantially 3.58 MHz) and a display clock signal (for example, a signal having a frequency of substantially 5.727 MHz). When character and picture information is displayed on the screen of a television receiver, the display portion in the horizontal direction is determined with reference to the horizontal synchronisation signal: that is, such information is displayed at a predetermined position (time) with respect to the position (time) of the horizontal sychronisation signal. To indicate such display position, a special pulse is generated. The position of the special pulse is determined by the operation of a counter which begins at a time which, because of deficiencies in previously proposed structures, may change by one clock period in successive horizontal lines. This of course correspondingly displaces the display position pulse so that a jitter appears in the horizontal direction in a picture reproduced on the screen of the television receiver.

According to the present invention there is provided a signal generator circuit comprising:
reference signal oscillator means for producing a square-wave reference signal having a series of rising edges;
means responsive to the reference signal for generating a horizontal synchronisation signal synchronised with the reference signal;
frequency-dividing means responsive to the reference signal for producing a square-wave colour sub-carrier signal having a series of rising edges;
a phase-locked loop circuit responsive to the sub-carrier signal and including a voltage-controlled oscillator, the voltage-controlled oscillator being operative to produce a square-wave oscillation signal having a series of rising edges, at least one rising edge of the sub-carrier signal coinciding with a rising edge of the oscillation signal from the voltage-controlled oscillator, the oscillation signal from the voltage-controlled oscillator being synchronised with the sub-carrier signal (SC);
means for detecting a time at which a rising edge of the sub-carrier signal coincides with a rising edge of the oscillation signal of the voltage-controlled oscillator;
means for generating a square-wave display clock signal synchronised with the oscillation signal of the voltage-controlled oscillator and having a series of falling edges;
means for generating a power supply voltage for the signal generator circuit, the power supply voltage increasing to a stable value over a predetermined period after power is applied to the signal generator circuit,
means for detecting the increase of the power supply voltage;
wherein the time detecting means and the increase detecting means control the phases of the horizontal synchronisation generating means and the display clock generating means to have a phase relationship in which the rising edge of the horizontal synchronisation signal does not coincide with a rising edge of the display clock signal.

A preferred signal generator circuit embodying the invention and described hereinbelow can generate a synchronisation signal for a television receiver for use with a CAPTAIN or other videotex character and picture information system and similar systems.

In the preferred signal generator circuit, a display position pulse is formed at a constant position with respect to a horizontal synchronisation signal so that jitter in the horizontal direction of a picture displayed on a screen can be avoided.

The preferred signal generator circuit can produce a display clock signal and a horizontal synchronisation signal having a constant phase relation therebetween such that, for example, the rising edge of the display clock signal and the rising edge of the horizontal synchronisation avoid coincidence with each.

The invention will now be further described, by way of illustrative and non-limiting example, with reference to the accompanying drawings, in which like references designate like elements and parts throughout, and in which:
Figure 1 is a block diagram of a previously proposed signal generator circuit for generating a colour sub-carrier signal and a display clock signal for use in a television receiver forming part of a CAPTAIN or other videotex system or the like;
Figure 2 is a waveform diagram useful for explaining the operation of the signal generator circuit of Figure 1;
Figure 3 is a block diagram of a signal generator circuit constituting a preferred embodiment of the present invention; and
Figures 4A to 4I are respect waveform diagrams useful for explaining the operation of the signal generator circuit of Figure 3.

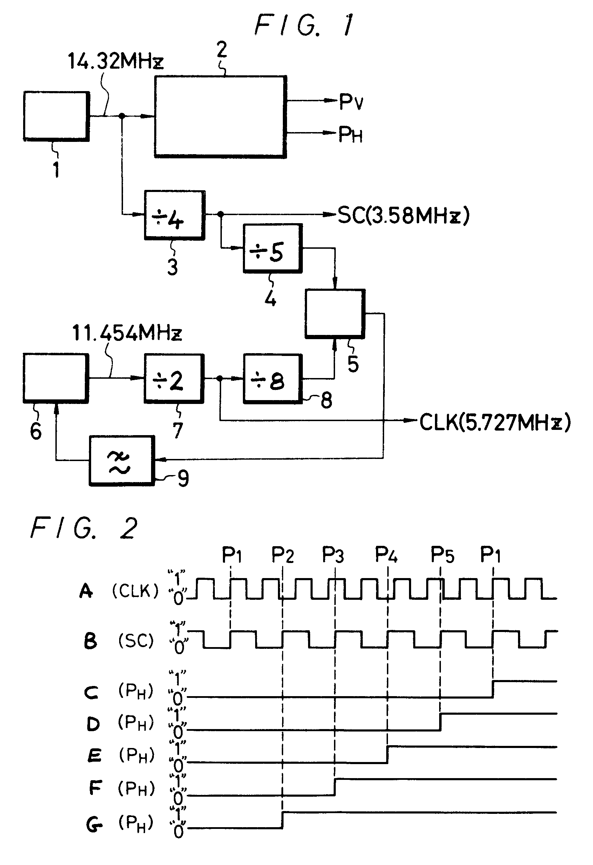

Figure 1 shows a typical previously proposed signal generator circuit for generating a colour sub-carrier signal and a display clock signal for use in a television receiver forming part of a CAPTAIN or other videotex system or the like. In Figure 1, an oscillator circuit 1 generates an oscillation signal with a frequency of substantially 14.32 MHz, which is four times the desired colour sub-carrier frequency of substantially 3.58 MHz. The oscillation signal is supplied to a television synchronisation signal generator circuit 2, which produces a vertical synchronization signal P_{V} and a horizontal synchronisation signal P_{H}.

The oscillation signal of 14.32 MHz from the oscillator circuit 1 is supplied also to a frequency divider 3, which divides the input frequency of 14.32 MHz by four to produce the colour sub-carrier signal SC of 3.58 MHz. The colour sub-carrier signal SC is utilised in a known manner by circuitry not shown. Since the horizontal synchronisation signal P_{H} and the colour sub-carrier signal SC are produced in response to the same oscillation signal from the oscillator circuit 1, they are synchronised with each other in phase.

The colour sub-carrier signal SC of 3.58 MHz from the frequency divided 3 is supplied also to a frequency divider 4, which divides the input frequency of 3.58 MHz by five and supplies a signal having a frequency of substantially 716 KHz to a phase comparator 5.

A voltage-controlled oscillator (VCO) 6 generates a signal having a frequency of substantially 11.454 MHz. This signal is supplied to a frequency divider 7 that divides by two. An output of the divider 7 is supplied to a frequency divider 8 that divides by eight. An output of the frequency divider 8 is supplied to the phase comparator 5 in which it is compared in phase with the signal of substantially 716 KHz which results from frequency-dividing the colour sub-carrier signal SC of 3.58 MHz by five. An error signal from the phase comparator 5 is supplied through a low-pass filter 9 to the voltage-controlled oscillator 6 as a control voltage thereof. Accordingly, the voltage-controlled oscillator 6 produces an oscillation signal of substantially 11.454 MHz and the frequency divider 7 produces a signal of substantially 5.727 MHz which is supplied to circuitry (not shown) as a display clock signal CLK. The display clock signal CLK is, of course, synchronised in phase with the colour sub-carrier signal SC.

The frequency (5.727 MHz) of the display clock signal CLK is thus 8/5 times the frequency (3.58 MHz) of the colour sub-carrier signal SC. Phase synchronisation is established between the signal obtained by frequency-dividing the colour sub-carrier signal SC by five (by means of the divider 4) and that obtained by frequency-dividing the display clock signal CLK by eight (by means of the divider 8). As a result, the phase difference between the display clock signal CLK (shown in line A of Figure 2) and the colour sub-carrier signal SC (shown in line B of Figure 2) assumes five different values at the times P₁ to P₅. Specifically, each of the times P₁ to P₅ coincides with a rising edge of the colour sub-carrier signal SC, but only the time P₁ coincides with a rising edge of the display clock signal CLK; the remaining times P₂ to P₅ fall varying distances between rising and falling edges of the display clock signal CLK. Since, as indicated above, the horizontal synchronisation signal P_{H} is phase-synchronised with the colour sub-carrier signal SC, the phase difference between the respective rising edges of the horizontal synchronisation signal P_{H} and the display clock signal CLK also assumes any of five different values at times P₁ to P₅, as shown in line A in conjunction with lines C to G of Figure 2.

In this previously proposed signal generator circuit, the one of the times P₁ to P₅ at which the phase difference between the rising edges of the horizontal synchronisation signal P_{H} and the display clock signal CLK is measured is randomly determined in accordance with the initial state of a counter or the like included in the synchronisation signal generator circuit 2 and the lock-in time of a phase-locked loop (PLL) circuit that includes the phase comparator 5, the voltage-controlled oscillator 6, etc.

When character and picture information is displayed on the screen of a television receiver employed in a CAPTAIN or other videotex system or the like, the display position in the horizontal direction is determined with reference to the horizontal synchronisation signal P_{H}: that is, such information is displayed at a predetermined position (time) with respect to the position (time) of the horizontal synchronisation signal P_{H}. To indicate such display position, a special pulse (hereinafter referred to as a display position pulse) is generated.

The display position pulse is generated by employing the rising edge of the horizontal synchronisation signal P_{H} to reset (or preset) a counter or the like (not shown) and by then counting the successive rising edges of the display clock signal CLK until a count value is reached which corresponds to the desired display position.

However, as indicated above, there is a possibility that the phase difference between the rising edges of the horizontal synchronisation signal P_{H} and the display clock signal CLK will assume any of five values respectively indicated at the times P₁ to P₅. If the randomly-determined time is such that the rising edge of the horizontal synchronisation signal P_{H} and the rising edge of the display clock signal CLK are very close to each other, as at the time P₁, then when the rising edge of the horizontal synchronisation signal P_{H} appears, it becomes difficult to determine whether the count of the display clock signal CLK pulses should begin with the present or instant rising edge thereof or whether it should begin with the next following rising edge thereof. As a result, in the worst case, the operation of the counter begins at a time which changes by one clock period at every horizontal line. This of course correspondingly displaces the display position pulse. Thus, a jitter appears in the horizontal direction in a picture reproduced on the screen of the television receiver. Statistically, the horizontal jitter is unlikely to affect every line, but occurs periodically.

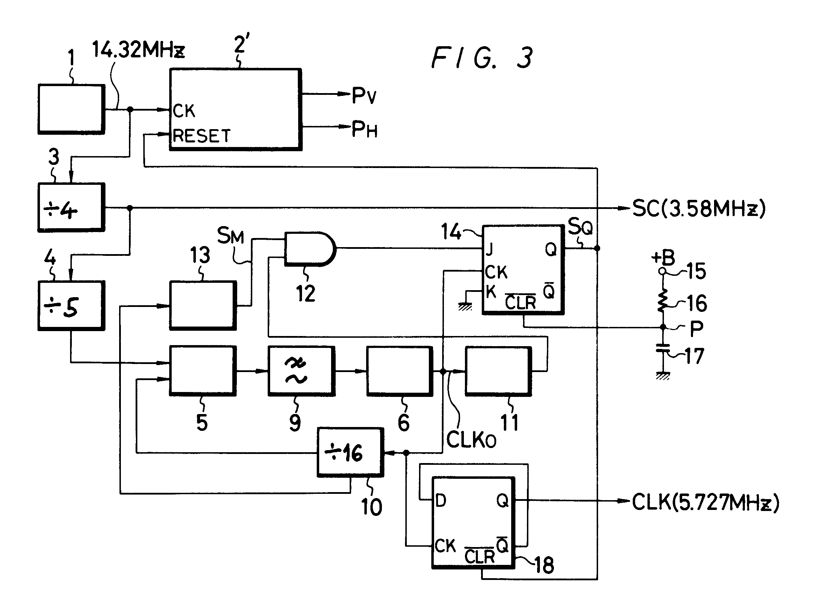

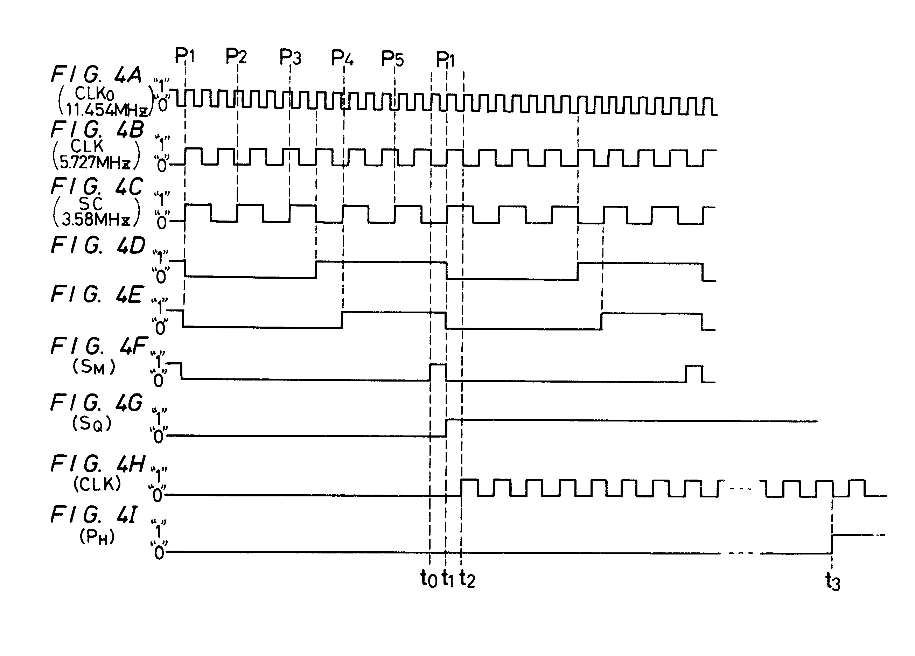

Figures 3 and 4A to 4I illustrate a preferred embodiment of signal generator circuit according to the present invention which reliably prevents horizontal jitter in the display. In this signal generator circuit, the display clock signal CLK (Figure 4H) and the horizontal synchronisation signal P_{H} (Figure 4I) always have a constant phase relation therebetween in which the rising edge of the display clock signal CLK and the rising edge of the horizontal synchronisation signal P_{H} never coincide with each other. Preferably, a falling edge of the display clock signal CLK coincides with the rising edge of the horizontal synchronisation signal P_{H}, as shown in Figures 4H and 4I at a time t₃.

In Figure 3, parts corresponding to parts of Figure 1 are designated by the same references and are not described in detail. A television synchronisation signal generator circuit 2' has a clock input terminal CK to which an oscillation signal having a frequency of substantially 14.32 MHz is supplied from the oscillator 1. On the basis of the oscillation signal of 14.32 MHz supplied thereto, the synchronisation signal generator circuit 2' produces a vertical synchronisation signal P_{V} and a horizontal synchronisation signal P_{H}. The circuit 2' includes a reset terminal R. When a low-level signal "0" is supplied to the reset terminal R, the circuit 2' is held in a reset state; and, when a high-level signal "1" is supplied to the reset terminal R, the circuit 2' starts its operation.

The oscillation signal of 14.32 MHz from the oscillator 1 is supplied also to a frequency divider 3, which divides the 14.32 MHz signal by four and produces a colour sub-carrier signal SC having a frequency of substantially 3.58 MHz. The colour sub-carrier signal SC is supplied to a frequency divider 4, which divides the 3.58 MHz signal by five and produces a signal having a frequency of substantially 716 KHz. The output of the frequency divider 4 is supplied to a phase comparator 5.

The oscillation signal from a voltage-controlled oscillator (VCO) 6, which forms a part of a phase-locked loop (PLL) circuit, is supplied to a frequency divider 10. The frequency divider 10 divides the frequency of the signal from the VCO 6 by sixteen and supplies an output to the phase comparator 5. The frequency divider 10, like the other frequency dividers employed in the present signal generator circuit, may comprise a counter. The divider 10 may comprise, for example, an up-mode counter for counting from 0 to 15 and producing one output pulse for every sixteen input pulses. The phase comparator 5 makes a phase comparison between the signal supplied by the divider 10 and the above-mentioned signal which is generated by the frequency divider 4 when it divides the frequency of the colour sub-carrier signal SC of 3.58 MHz by five. The compared error signal from the phase comparator 5 is supplied through a low-pass filter (LPF) 9 to the VCO 6 as its control voltage so that the VCO 6 produces an oscillation signal CLK₀ (shown in Figure 4A) of substantially 11.454 MHz.

The oscillation signal CLK₀ from the VCO 6 is supplied to a timer circuit 11. In the timer circuit 11 the oscillation signal CLK₀ supplied thereto is counted. Until the above-described PLL circuit is stabilised, the timer 11 produces a low-level signal "0" at its output; thereafter, the timer 11 produces a high-level signal "1" at its output. The output signal from the timer 11 is supplied to one input terminal of an AND gate 12.

A detecting circuit 13 is provided to detect a time P₁ at which the rising edge of the colour sub-carrier signal SC of 3.58 MHz (shown in Figure 4C) coincides with the rising edge of the oscillation signal CLK₀ of 11.454 MHz (shown in Figure 4A). The detecting circuit 13 is supplied with signals corresponding to selected bits of a counter incorporated in the frequency divider 10 so that the detecting circuit 13 produces a signal S_{M} which, as shown in Figure 4F, becomes high or "1" during each period of the signal CLK₀ in which the count value of such counter is maximum. Alternatively, when the counter incorporated in the frequency divider 10 counts in a down-mode, the signal S_{M} goes high during the period of the signal CLK₀ in which the count value of the counter is minimum. The maximum or minimum count, as the case may be, is reached during the period of the signal CLK₀ immediately preceding the time P₁. The detection signal S_{M} is high or "1" during the interval from t₀ to t₁ and is supplied to another input terminal of the AND gate 12.

An output signal from the AND gate 12, which is produced when and only when a signal is supplied to each input terminal of the AND gate, is supplied to a J input terminal of a J-K flip-flop 14. The K input terminal of the flip-flop 14 is grounded, and a clock input terminal CK thereof is supplied with the oscillation signal CLK₀.

A power source terminal 15, to which a positive dc voltage +B is applied, is grounded through a series-connected resistor 16 and capacitor 17 that constitute a time-constant circuit. The signal obtained at the junction or connection point P between the resistor 16 and the capacitor 17 is supplied to a clear terminal C̅L̅R̅ of the flip-flop 14. The signal produced at the junction P is low or "0" during a predetermined period T₀ (determined by the time constant of the resistor 16 and the capacitor 17) after power is applied to the terminal 15.

A signal S_{Q} (shown in Figures 3 and 4G) obtained at the output terminal Q of the flip-flop 14 is supplied to the reset terminal R of the synchronisation signal generator 2'.

The signal S_{Q} is also supplied to a clear terminal C̅L̅R̅ of a D-type flip-flop 18. The flip-flop 18 receives the oscillation signal CLK₀ (shown in Figures 3 and 4A) from the VCO 6 at a clock input terminal CK thereof so that the flip-flop 18 is operated at each rising edge of the oscillation signal CLK₀. The signal obtained in response thereto at an inverted output terminal Q̅ of the flip-flop 18 is supplied to a D input terminal thereof so that the flip-flop 18 produces the display clock signal CLK (Figures 3 and 4H) of substantially 5.727 MHz at an output terminal Q.

For comparison, the display clock signal CLK of Figure 1 and line A of Figure 2 is reproduced in Figure 4B. It is evident that the display clock signal CLK in Figure 4B is 180^{o} out of phase with that of Figure 4H. Figure 4D shows the output signal from the frequency divider 10 which is supplied to the phase comparator 5, and Figure 4E shows the output signal from the frequency divider 4, which is likewise supplied to the phase comparator 5.

The above-described signal generator circuit embodying the invention operates as follows.

When power is applied to the terminal 15, a signal which is low or "0" during a predetermined period T₀ is produced at the junction P between the resistor 16 and the capacitor 17 and supplied to the clear terminal C̅L̅R̅ of the flip-flop 14. Accordingly, the flip-flop 14 holds the clear mode during the period T₀ so that the signal S_{Q} produced at the output terminal Q thereof is low or "0". Since the signal S_{Q} is supplied to the reset terminal R of the synchronisation signal generator 2', the circuit 2' is held in the reset state during the period T₀ and thus it does not start its operation (see the lefthand portion of Figure 4I). Further, since the signal S_{Q} is supplied to the clear terminal C̅L̅R̅ of the flip-flop 18, the flip-flop 18 holds its clear mode during the period T₀ (see the lefthand portion of Figure 4G) and thus the display clock signal CLK is not produced at the output terminal Q thereof (see the lefthand portion of Figure 4H).

After the phase-locked loop (PLL) circuit including the VCO 6 stabilises, the timer circuit 11 produces an output signal which is high or "1" and which is supplied to one input terminal of the AND gate 12. During the interval from t₀ to t₁, the detecting circuit 13 produces the signal S_{M} as shown in Figures 3 and 4F, and the signal S_{M} is supplied to the other input terminal of the AND gate 12. Accordingly, during the period from t₀ to t₁ in which the detection signal S_{M} is high or "1", the AND gate 12 produces at its output a signal which is high or "1", and this output is supplied to the J terminal of the flip-flop 14.

If the above-described predetermined period T₀ has elapsed, the signal S_{Q} (shown in Figures 3 and 4G) produced at the output terminal Q of the flip-flop 14 is changed from low or "0" to high or "1" at the time t₁. Since the K terminal of the flip-flop 14 is grounded, the flip-flop 14 remains in the high or "1" state after the time t₁.

At the time t₁, the signal S_{Q}, which is now high or "1", is supplied to the reset terminal R of the synchronisation signal generator 2' and to the clear terminal C̅L̅R̅ of the flip-flop 18. At the time t₁, therefore, the circuit 2' starts its operation and the clear mode of the flip-flop 18 is released. Moreover, since a high or "1" signal is supplied to the D terminal of the flip-flop 18 from its inverted output terminal Q̅, the display clock signal CLK (shown in Figures 3 and 4H) of substantially 5.727 MHz is produced at its output terminal Q beginning at the time t₂, which follows the time t₁ by one period of the signal CLK₀.

Since the time t₂, when the display clock signal CLK begins, follows the time t₁, when the operation of the synchronisation signal generator 2' begins, by one cycle of the signal CLK₀ or one-half cycle of the clock signal CLK, the rising edge of the horizontal synchronisation signal P_{H} (Figure 4I) always coincides with the falling edge of the display clock signal CLK (Figure 4H) at a time t₃. In other words, in this embodiment, the rising edge of the display clock signal CLK is never coincident with the rising edge of the horizontal synchronisation signal P_{H}. Accordingly, when the counter controlling the generation of the display position pulse is reset by the horizontal synchronisation signal P_{H} generated by the circuit of Figure 3 and the display position pulse is formed by circuitry (not shown) for counting the display clock signal CLK generated by the circuit of Figure 3, the position at which the display position pulse is formed is always constant (that is, it never fluctuates). As a result, horizontal jitter in the displayed picture is prevented.

The signal generator circuit embodying the invention is thus ideally suited for a television receiver for use with a CAPTAIN or other videotex character and picture information system and similar systems. A display position pulse is formed at a constant position so that jitter in the horizontal direction of a picture displayed on a screen is avoided. The signal generator circuit embodying the invention can produce a display clock signal and a horizontal synchronisation signal having a constant phase relation therebetween such that, for example, the rising edge of the display clock signal and the rising edge of the horizontal synchronisation signal are never coincident with each other.

Many modifications of the preferred embodiment of the invention disclosed herein will readily occur to those skilled in the art upon consideration of the foregoing disclosure. For example, the phase relationship between the rising edge of the display clock signal CLK and the rising edge of the horizontal synchronisation signal P_{H} can be varied parametrically so long as they are never selected so that they coincide. Moreover, the frequencies of the various signals and, correspondingly, the characteristics of the oscillators and frequency dividers can be varied. Also, devices other than the disclosed detector, dividers, oscillator and flip-flops can be used for generating the signals S_{M}, S_{Q}, CLK₀ and CLK.

## Claims

1. A signal generator circuit comprising:
reference signal oscillator means (1) for producing a square-wave reference signal having a series of rising edges;
means (2') responsive to the reference signal for generating a horizontal synchronisation signal (P_{H}) synchronised with the reference signal;
frequency-dividing means (3) responsive to the reference signal for producing a square-wave colour sub-carrier signal (SC) having a series of rising edges;
a phase-locked loop circuit responsive to the sub-carrier signal (SC) and including a voltage-controlled oscillator (6), the voltage-controlled oscillator being operative to produce a square-wave oscillation signal (CLK_{O}) having a series of rising edges, at least one rising edge of the sub-carrier signal (SC) coinciding with a rising edge of the oscillation signal (CLK_{O}) from the voltage-controlled oscillator (6), the oscillation signal (CLKₒ) from the voltage-controlled oscillator (6) being synchronised with the sub-carrier signal (SC); means (13) for detecting a time at which a rising edge of the sub-carrier signal (SC) coincides with a rising edge of the oscillation signal (CLK_{O}) of the voltage-controlled oscillator;
means (18) for generating a square-wave display clock signal (CLK) synchronised with the oscillation signal (CLK_{O}) of the voltage-controlled oscillator (6) and having a series of falling edges;
means for generating a power supply voltage for the signal generator circuit, the power supply voltage increasing to a stable value (+B) over a predetermined period (Tₒ) after power is applied to the signal generator circuit,
means for detecting the increase of the power supply voltage;
wherein the time detecting means (13) and the increase detecting means control the phases of the horizontal synchronisation generating means (2') and the display clock generating means (18) to have a phase relationship in which the rising edge of the horizontal synchronisation signal (P_{H}) does not coincide with a rising edge of the display clock signal (CLK).

2. A signal generator circuit according to claim 1, wherein the time detecting means (13) and the increase detecting means control the phases of the horizontal synchronisation generating means (2') and the display clock signal generating means (18) to have a phase relationship in which the rising edge of the horizontal synchronisation signal (P_{H}) coincides with a falling edge of the display clock signal (CLK).

3. A signal generator circuit according to claim 1 or claim 2, comprising means (14) for determining a time for starting the horizontal synchronisation signal generating means (2') and the display clock signal generating means (18), the starting means (14) being controlled by the time detecting means (13) and the increase detecting means.

4. A signal generator circuit according to claim 3, comprising means (11) for detecting the condition of the phase-locked loop circuit, an output of the condition detecting means (11) being supplied to the starting means (14).

5. A signal generator circuit according to claim 4, comprising an AND circuit (12) responsive to the time detecting means (13) and the condition detecting means (11) and operative to supply an output to the starting means (14).

6. A signal generator circuit according to claim 3, claim 4 or claim 5, wherein the display clock signal generating means (18) and the starting means (14) respectively comprise flip-flop circuits connected to be supplied with the oscillation signal (CLK_{O}) of the voltage-controlled oscillator (6).

7. A signal generator circuit according to claim 6, wherein the oscillation signal (CLK_{O}) of the voltage-controlled oscillator (6) is periodic and the display clock signal generating means (18) comprises a D-type flip-flop (18) having an input terminal (D) and an inverted output terminal (Q̅) connected to one another and another input terminal (CK) connected to be supplied with the oscillation signal (CLK_{O}) of the voltage-controlled oscillator (6) so that the display clock signal generating means (18) starts generating the display clock signal (CLK) during the period of the oscillation signal (CLK_{O}) of the voltage-controlled oscillator (6) immediately following said starting time.

## Patentansprüche

1. Signalgenerator-Schaltkreis mit:
einem Referenzsignal-Oszillator (1) zur Erzeugung eines Rechteckwellen-Referenzsignals mit einer Folge von Anstiegsflanken;
einem Schaltungsteil (2'), das auf das Referenzsignal mit Erzeugen eines Zeilen-Synchronsignals (P_{H}) anspricht, das mit dem Referenzsignal synchronisiert ist;
einem Frequenzteiler (3), der auf das Referenzsignal anspricht und ein Rechteckwellen-Farb-Subträgersignal (SC) erzeugt, das eine Folge von Anstiegsflanken hat;
einer Phasenregelschleife, die auf das Subträgersignal (SC) anspricht und die einen spannungsgesteuerten-Oszillator (6) hat, wobei der spannungsgesteuerte Oszillator dazu vorgesehen ist, ein Rechteckwellen-Oszillatorsignal (CLK₀) zu erzeugen, das eine Folge von Anstiegsflanken hat, wobei wenigstens eine der Anstiegsflanken des Subträgersignals (SC) mit einer Anstiegsflanke des Oszillatorsignals (CLK₀) des spannungsgesteuerten Oszillators (6) koinzidiert, wobei das Oszillatorsignal (CLK₀) des spannungsgesteuerten Oszillators (6) mit dem Subträgersignal (SC) synchronisiert ist;
einer Detektorschaltung (13) zur Detektion eines Zeitpunktes, zu dem eine Anstiegsflanke des Subträgersignals (SC) mit einer Anstiegsflanke des Oszillatorsignals (CLK₀) des spannungsgesteuerten Oszillators koinzidiert;
einer Generatorschaltung (18) zur Erzeugung eines Rechteckwellen-Display-Taktsignals (CLK), das mit dem Oszillatorsignal (CLK₀) des spannungsgesteuerten Oszillators (6) synchronisiert ist und eine Folge von Rückflanken hat;
einem Generatorteil Zur Erzeugung einer Versorgungsspannung für den Signalgenerator, wobei die Versorgungsspannung auf einen stabilen Wert (+B) in einem vorgegebenen Zeitraum (T₀) nach Anliegen der Spannungsversorgung an dem Generatorteil ansteigt;
einer Detektorschaltung zur Detektion des Anstiegs der Versorgungsspannung;
wobei die Detektorschaltung (13) zur Zeitdetektion und die Detektorschaltung zur Detektion des Anstiegs die Phasen des Schaltungsteils (2') zur Erzeugung des Zeilen-Synchronsignals und die Generatorschaltung (18) für das Display-Taktsignal steuert, um eine Phasenbeziehung zu haben, bei der die Anstiegsflanke des Zeilen-Synchronsignals (P_{H}) nicht mit der Anstiegsflanke des Display-Taktsignals (CLK) koinzidiert.

2. Signal-Generator-Schaltkreis nach Anspruch 1,
bei dem die Detektorschaltung (13) zur Detektion eines Zeitpunktes und die Detektorschaltung für den Anstieg die Phasen des Schaltungsteils (2') zur Erzeugung eines Zeilen-Synchronsignals und die Generatorschaltung (18) für die Erzeugung des Display-Taktsignals steuert, um eine Phasenbeziehung zu haben, bei der die Anstiegsflanke des Zeilen-Synchronsignals (P_{H}) mit einer Rückflanke des Display-Taktsignals (CLK) koinzidiert.

3. Signal-Generator-Schaltkreis nach Anspruch 1 oder 2,
mit einem Schaltungsteil (14) zur Bestimmung eines Zeitpunktes für den Start des Schaltungsteils (2') zur Erzeugung eines Zeilen-Synchronsignals und der Generatorschaltung (18) zur Erzeugung des Display-Taktsignals, wobei dieser Schaltungsteil (14) für das Starten von der Detektorschaltung (13) zur Detektion eines Zeitpunktes und der Detektorschaltung für den Anstieg gesteuert wird.

4. Signal-Generator-Schaltkreis nach Anspruch 3,
mit einem Schaltungsteil (11) zur Detektion des Zustands der Phasenregelschleife, wobei ein Ausgangssignal dieses Schaltungseils (11) dem Schaltungsteil (14) für das Starten zugeführt wird.

5. Signal-Generator-Schaltkreis nach Anspruch 4,
mit einer UND-Schaltung (12), die auf die Detektorschaltung (13) zur Detektion eines Zeitpunktes und das Schaltungsteil (11) zur Detektion des Zustands der Phasenregelschleife anspricht und ein Ausgangssignal an das Schaltungsteil (14) für das Starten liefert.

6. Signal-Generator-Schaltkreis nach Anspruch 3 oder 4 oder 5,
bei dem die Generatorschaltung (18) zur Erzeugung des Display-Taktsignals und das Schaltungsteil (14) für das Starten jeweils Flip-Flop-Schaltkreise haben, die so verbunden sind, daß ihnen das Oszillatorsignal (CLK₀) des spannungsgesteuerten Oszillators (6) zugeführt wird.

7. Signal-Generator-Schaltkreis nach Anspruch 6,
bei dem das Oszillatorsignal (CLK₀) des spannungsgesteuerten Oszillators (6) periodisch ist und die Generatorschaltung (18) zur Erzeugung des Display-Taktsignals ein D-Flip-Flop (18) mit einem Eingangsanschluß (D) und einem invertierten Ausgangsanschluß (Q̅), die miteinander verbunden sind, und einem anderen Eingangsanschluß (CK) hat, dem das Oszillatorsignal (CLK₀) des spannungsgesteuerten Oszillators (6) zugeführt wird, so daß die Generatorschaltung zur Erzeugung des Display-Taktsignals mit der Erzeugung des Display-Taktsignals (CLK) während der Zeitdauer des Oszillatorsignals (CLK₀) des spannungsgesteuerten Oszillators unmittelbar auf den Startzeitpunkt folgend beginnt.

## Revendications

1. Un circuit générateur de signaux comprenant :
des moyens oscillateurs de génération de signal de référence (1) destinés à produire un signal de référence de forme carrée comportant une série de fronts montants;
des moyens (2') qui réagissent au signal de référence en générant un signal de synchronisation horizontale (P_{H}) synchronisé avec le signal de référence;
des moyens de division de fréquence (3) qui réagissent au signal de référence en produisant un signal de sous-porteuse de couleur de forme carrée (SC) comportant une série de fronts montants;
un circuit de boucle de verrouillage de phase qui réagit au signal de sous-porteuse (SC) et qui comprend un oscillateur commandé par tension (6), l'oscillateur commandé par tension produisant un signal d'oscillation de forme carrée (CLK₀) ayant une série de fronts montants, au moins un front montant du signal de sous-porteuse (SC) coïncidant avec un front montant du signal d'oscillateur (CLK₀) qui provient de l'oscillateur commandé par tension (6), le signal d'oscillation (CLK₀) qui provient de l'oscillateur commandé par tension (6) étant synchronisé avec le signal de sous-porteuse (SC);
des moyens (13) destinés à détecter un instant auquel le front montant du signal de sous-porteuse (SC) coïncide avec un front montant du signal d'oscillation (CLK₀) de l'oscillateur commandé par tension;
des moyens (18) destinés à générer un signal d'horloge de visualisation de forme carrée (CLK) synchronisé avec le signal d'oscillation (CLK₀) de l'oscillateur commandé par tension (6) et comportant une série de fronts montants;
des moyens destinés à générer une tension d'alimentation pour le circuit générateur de signaux, la tension d'alimentation augmentant jusqu'à une valeur stable (+B) au cours d'une durée prédéterminée (T₀) après la mise sous tension du circuit générateur de signaux;
des moyens destinés à détecter l'augmentation de la tension d'alimentation;
dans lequel les moyens de détection d'instant (13) et les moyens de détection d'augmentation commandent les phases des moyens de génération de signal de synchronisation horizontale (2') et des moyens de génération d'horloge de visualisation (18), de façon qu'ils présentent une relation de phase dans laquelle le front montant du signal de synchronisation horizontale (P_{H}) ne coïncide pas avec un front montant du signal d'horloge de visualisation (CLK).

2. Un circuit générateur de signaux selon la revendication 1, dans lequel les moyens de détection d'instant (13) et les moyens de détection d'augmentation commandent les phases des moyens de génération de signal de synchronisation horizontale (2') et des moyens de génération de signal d'horloge de visualisation (18), de façon qu'ils présentent une relation de phase dans laquelle le front montant du signal de synchronisation horizontale (P_{H}) coïncide avec un front descendant du signal d'horloge de visualisation (CLK).

3. Un circuit générateur de signaux selon la revendication 1 ou la revendication 2, comprenant des moyens (14) qui sont destinés à déterminer un instant pour le démarrage des moyens de génération de signal de synchronisation horizontale (2') et des moyens de génération de signal d'horloge de visualisation (18), les moyens de démarrage (14) étant commandés par les moyens de détection d'instant (13) et par les moyens de détection d'augmentation.

4. Un circuit générateur de signaux selon la revendication 3, comprenant des moyens (11) qui sont destinés à détecter la condition du circuit de boucle de verrouillage de phase, et un signal de sortie des moyens de détection de condition (11) étant appliqué aux moyens de démarrage (14).

5. Un circuit générateur de signaux selon la revendication 4, comprenant un circuit ET (12) qui fonctionne sous la dépendance des moyens de détection d'instant (13) et des moyens de détection de condition (11), et qui applique un signal de sortie aux moyens de démarrage (14).

6. Un circuit générateur de signaux selon la revendication 3, la revendication 4 ou la revendication 5, dans lequel les moyens de génération de signal d'horloge de visualisation (18) et les moyens de démarrage (14) comprennent respectivement des circuits de bascule qui sont connectés de façon à recevoir le signal d'oscillation (CLK₀) de l'oscillateur commandé par tension (6).

7. Un circuit générateur de signaux selon la revendication 6, dans lequel le signal d'oscillation (CLK₀) de l'oscillateur commandé par tension (6) est périodique, et les moyens de génération de signal d'horloge de visualisation (18) comprennent une bascule de type D (18) ayant une borne d'entrée (D) et une borne de sortie inversée (Q̅) connectées l'une à l'autre, et une autre borne d'entrée (CK) connectée de façon à recevoir le signal d'oscillation (CLK₀) de l'oscillateur commandé par tension (6), afin que les moyens de génération de signal d'horloge de visualisation (18) fassent démarrer la génération du signal d'horloge de visualisation (CLK) pendant la période du signal d'oscillation (CLK₀) de l'oscillateur commandé par tension (6), immédiatement à la suite de l'instant de démarrage.
